# EUROPEAN PATENT SPECIFICATION

(11) **EP 4 459 939 B1**
(45) Date of publication and mention of the grant of the patent: **22.04.2026**
(21) Application number: 22915152.7
(22) Date of filing: 30.12.2022
(51) Int. Cl.: H04L 41/0896, H04W 24/04, H04L 41/0816

(54) **CHANNEL RESOURCE ADJUSTMENT METHOD AND APPARATUS, AND COMMUNICATION DEVICE**
VERFAHREN UND VORRICHTUNG ZUR KANALRESSOURCENEINSTELLUNG UND KOMMUNIKATIONSVORRICHTUNG
PROCÉDÉ ET APPAREIL DE RÉGLAGE DE RESSOURCE DE CANAL, ET DISPOSITIF DE COMMUNICATION

(30) Priority: 31.12.2021 CN 202111664679
(43) Date of publication of application: 06.11.2024
(73) Proprietor: CHINA MOBILE COMMUNICATION CO., LTD. RESEARCH INSTITUTE, Beijing 100053 (CN); CHINA MOBILE COMMUNICATIONS GROUP CO., LTD., Beijing 100032 (CN)
(72) Inventor: HAN, Liuyan, Beijing 100053 (CN); YE, Wen, Beijing 100053 (CN)
(74) Representative: J A Kemp LLP
(86) International application number: PCT/CN2022/143809
(87) International publication number: WO 2023/125903

(56) References cited:
- CN-A- 102 195 859
- CN-A- 102 724 599
- CN-A- 102 984 605
- CN-A- 107 786 297
- CN-A- 110 808 793
- CN-A- 113 098 651
- US-A1- 2008 137 654
- US-A1- 2011 231 551
- ALEX LACKPOUR: "Copyright 2010 The Software Defined Radio Forum Inc", vol. 1900.5 - DYSPAN, 19 October 2020 (2020-10-19), pages 1 - 99, XP068253265, Retrieved from the Internet <URL:https://ieee-sa.imeetcentral.com/p/aQAAAAAEURNT> [retrieved on 20230712]

## Description

### TECHNICAL FIELD

The present disclosure relates to the technical field of communications, and in particular, to a path resource adjustment method and apparatus, and a communication device.

### BACKGROUND

At present, Flexible Ethernet (FlexE) technology, Metro Transport Network (MTN) technology and the like all support division of paths according to actually required resources. Taking bandwidth division as an example, during use of a network slice, bandwidth requirements may change at any time, so that bandwidth needs to be adjusted online. For example, a path bandwidth needs to be adjusted from 5 Gbps to 10 Gbps, or needs to be adjusted from 100 Mbps to 50 Mbps.

If a path has already issued a bandwidth adjustment requirement, but path resource adjustment is not finished successfully due to a fault such as a network or device fault, the problem of path resource mismatch is likely to occur, but at present there is no effective handling mechanism for coping with such a fault. Related technologies can be found at least in patent document US2008/137654A1.

### SUMMARY

Provided in embodiments of the present disclosure are a path resource adjustment method and apparatus, and a communication device, so as to solve the problem of lacking a mechanism for effectively handling a path resource adjustment fault in the prior art.

The present invention is set out in the appended set of claims.

In embodiments of the present disclosure, a first network element in a communication path sends alarm to a management control unit in the case of detecting that a resource adjustment fault has occurred in the communication path, the first network element being any one of the plurality of network elements; the management control unit sends a command indicating withdraw of resource adjustment to each of the plurality of network elements; and each of the plurality of network elements performs withdraw processing on resource adjustment of the network element based on the command. In this way, for a fault occurring during communication path resource adjustment, an effective handling mechanism is provided. The management control unit issues a command indicating withdraw of resource adjustment to network elements in a communication path to cause the network elements in the communication path to cancel current resource adjustment, thereby ensuring resource matching of each network element in the communication path.

### BRIEF DESCRIPTION OF THE DRAWINGS

In order to illustrate the technical solutions in the embodiments of the present disclosure more clearly, accompanying drawings to be used in the description of the embodiments of the present disclosure will be briefly introduced below. Apparently, the drawings in the following description are only some embodiments of the present disclosure. For those of ordinary skill in the art, other drawings can also be obtained according to these drawings without involving inventive skill.
FIG. 1 is a first flowchart of a path resource adjustment method provided in an embodiment of the present disclosure;
FIG. 2 is a second flowchart of a path resource adjustment method provided in an embodiment of the present disclosure;
FIG. 3 is a third flowchart of a path resource adjustment method;
FIG. 4A is a flowchart of node interaction when a rollback operation is performed in a time slot bandwidth decrease adjustment scenario provided in an embodiment of the present disclosure;
FIG. 4B is a flowchart of node interaction when a rollback operation is performed in a time slot bandwidth increase adjustment scenario provided in an embodiment of the present disclosure;
FIG. 5 is a first structural diagram of a path resource adjustment apparatus provided in an embodiment of the present disclosure;
FIG. 6 is a second structural diagram of a path resource adjustment apparatus provided in an embodiment of the present disclosure; and
FIG. 7 is a structural diagram of a communication device provided in an embodiment of the present disclosure.

### DETAILED DESCRIPTION

The technical solutions in the embodiments of the present disclosure are described clearly and completely below with reference to the drawings in the embodiments of the present disclosure. Evidently, the described embodiments are part of the embodiments of the present disclosure, rather than all of the embodiments. All other embodiments that are arrived at by a person of ordinary skill in the art based on the embodiments in the present disclosure without involving inventive skill fall within the scope of protection of the present disclosure.

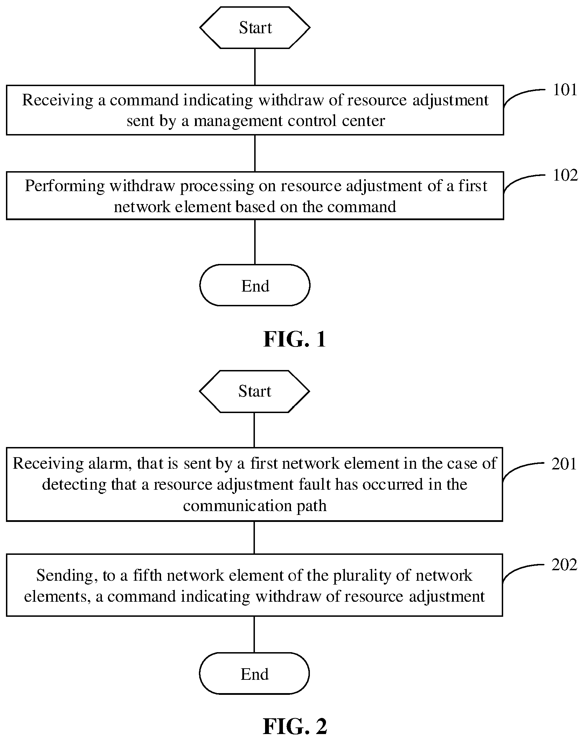

Referring to FIG. 1, FIG. 1 is a flowchart of a path resource adjustment method provided in an embodiment of the present disclosure. The method is performed by a first network element in a communication path. The communication path includes a plurality of network elements. As shown in FIG. 1, the method includes the following steps:
Step 101, receiving a command indicating withdraw of resource adjustment sent by a management control unit.

The embodiment of the present disclosure may be applied to handling of a fault (including adjustment incompleteness, an adjustment failure, etc.) that occurs during resource adjustment (for example, adjustment to a bandwidth, a frequency, a rate, etc.) of a communication device, i.e., a network element, in a communication path. Specifically, the management control unit for managing and controlling each network element in the path issues, to the network elements in the path, a command of withdraw of resource adjustment when an adjustment fault occurs in path resources, to instruct the network elements to perform withdraw processing on the current resource adjustment, so that the network elements maintain resources before adjustment being unchanged, thereby ensuring that end-to-end path resources remain in a matched state, and avoiding transmission failures such as packet loss and transmission capacity degradation resulting from a path resource mismatch.

The communication path may specifically refer to a communication transmission path between a source end and a sink end. That is, a communication path may include a source end, a plurality of intermediate network elements, and a sink end that are sequentially connected. The source end refers to a sending end, and the sink end refers to a receiving end. When a communication path is a bidirectional transmission path, the source end and the sink end are interchangeable, that is, both ends in the communication path may serve as a sending end and a receiving end.

The communication path may be a Metro Transport Network (MTN) path, or a non-MTN path.

The first network element may refer to any network element in the communication path, that is, may be a source end, an intermediate network element, or a sink end.

The management control unit may refer to a network control unit connected to each network element in the communication path, and is configured to perform management and control on each network element in the communication path, including delivering an instruction to each network element, acquiring information reported by each network element, and the like. The management control unit may be an independent center, or may be integrated with other units.

In the embodiment of the present disclosure, each network element in the communication path may discover a resource adjustment fault during resource adjustment, and report the same to the management control unit, so that the management control unit may receive alarm reported by a certain network element in the communication path upon detecting that a resource adjustment fault has occurred in the communication path. That is, the alarm may indicate that a fault has occurred in the current resource adjustment, and specifically, may also indicate the specific network element on which the fault has occurred, for example, whether an adjustment failure has occurred on the network element that reports the alarm or whether the network element that reports the alarm discovers that another network element has not finished resource adjustment.

It should be noted that, each network element in the communication path may perform resource adjustment based on a resource adjustment command issued by the management control unit, and each network element may perform resource adjustment in an orderly manner according to node position and resource adjustment direction (for example, increasing or decreasing), so as to ensure that lossless adjustment is performed on the communication path. In a specific implementation manner, the resource adjustment may be bandwidth adjustment, including bandwidth decrease adjustment or bandwidth increase adjustment.

For example, the management control unit may deliver a resource adjustment command to each network element in the communication path based on actual requirements, and include resource adjustment configuration information in the command to indicate how resources are specifically adjusted. Each network element in the communication path performs orderly resource decrease adjustment on each node sequentially starting from a source node (i.e., a source end) to a sink node (i.e., a sink end) based on the resource adjustment command, or performs orderly resource increase adjustment on each node sequentially starting from a sink node (i.e., a sink end) to a source node (i.e., a source end) based on the resource adjustment command.

Any network element in the communication path can detect, during resource adjustment, whether a resource adjustment fault has occurred, and any network element detecting a resource adjustment fault can report alarm to the management control unit. When the first network element detects a resource adjustment fault, the first network element may report alarm related to the resource adjustment fault to the management control unit. That is, before step 101, the method may further include:
in the case of detecting that a resource adjustment fault has occurred in the communication path, sending alarm to the management control unit.

Specifically, the first network element may detect that a resource adjustment failure has occurred on the first network element, or detect that a resource adjustment fault, such as a resource adjustment failure or an unresponsive resource adjustment, has occurred on a neighboring network element thereof, such as an upstream network element (a network element that sends information to the first network element) or a downstream network element (a network element that receives information sent by the first network element).

In this way, the first network element can discover and report the resource adjustment fault in time.

When a network element, i.e., one other network element in the communication path, other than the first network element detects a resource adjustment fault, the other network element may also send alarm to the management control unit, and the management control unit may deliver the command of withdraw of resource adjustment to each network element in the communication path, so that the first network element, as a network element that does not report the alarm, may also receive the command indicating withdraw of resource adjustment sent by the management control unit.

In some embodiments, the detecting that a resource adjustment fault has occurred in the communication path includes:
sending resource adjustment request to a second network element, wherein the second network element is a network element, which is adjacent to the first network element, of the plurality of network elements;
in the case that resource adjustment reply sent by the second network element is not received before a preset timer expires, detecting that a resource adjustment fault has occurred in the communication path.

In an implementation manner, a resource adjustment message timeout response mechanism may be established in each network element in the communication path. That is, if resource adjustment request is sent from a certain network element but corresponding resource adjustment reply is not received within a set time, the network element may report alarm to the management control unit, and then the management control unit sends a command of withdraw of resource adjustment to each network element in the communication path.

Each network element in the communication path may perform resource adjustment in sequence. Specifically, according to the signal transmission direction of the path, an upstream network element in the communication path sends resource adjustment request to a downstream network element. Normally, upon receiving the resource adjustment request, the downstream network element needs to return resource adjustment reply to the downstream network element. However, when a fault occurs, for example, when a network element device fault, a network fault, or the like occurs, the downstream network element may not receive the resource adjustment request and thus cannot return the resource adjustment reply to the first network element, or the downstream network element cannot send the resource adjustment reply, or the upstream network element cannot receive the resource adjustment reply. In this case, the upstream network element may determine, by means of the timeout response mechanism, that a resource adjustment fault is currently occurring in the communication path. The upstream network element and the downstream network element may be any two adjacent network elements in the communication path.

In this implementation manner, the first network element may send, as an upstream network element, resource adjustment request to a downstream network element adjacent thereto, i.e., the second network element, and start timing from the time when the resource adjustment request is sent. Specifically, a timer having a preset duration may be set. In the case that it is detected that the resource adjustment reply returned by the second network element is not received before the preset timer expires, it can be determined that a resource adjustment fault has occurred in the communication path. Specifically, a fault occurs when the second network element performs resource adjustment, so that alarm can be sent to the management control unit. In the case that the resource adjustment reply returned by the second network element is received before the preset timer expires, it can be determined that no fault is currently present in the communication path. The second network element may perform resource adjustment normally, and after the adjustment succeeds, resource adjustment of a next network element may be started sequentially. The preset duration may be preset according to actual requirements, and for example, may be set to 1 second, 1.5 seconds, 2 seconds, or the like.

In this way, in this implementation manner, the message timeout response mechanism can enable the network element in the communication path to promptly discover a resource adjustment fault in the communication path, and alarm is reported to cause the management control unit and each network element in the communication path to trigger an effective handling mechanism for the fault.

In some embodiments, the detecting that a resource adjustment fault has occurred in the communication path includes:
sending resource adjustment request to a second network element, wherein the second network element is a network element, which is adjacent to the first network element, of the plurality of network elements;
in the case that resource adjustment reply sent by the second network element is not received before a preset timer expires, resending the resource adjustment request to the second network element; and
in the case that the number of times of resending reaches a preset number and the resource adjustment reply sent by the second network element is still not received before the preset timer expires, sending the alarm to the management control unit.

That is, in a more specific implementation manner, a resource adjustment message timeout response resending mechanism may also be established in each network element in the communication path. That is, if resource adjustment request is sent from a certain network element but the corresponding resource adjustment reply is not received within a set time, the network element may resend the resource adjustment request. If the corresponding resource adjustment reply is still not received after the resending, alarm is reported to the management control unit. Alternatively, the maximum number m of times of resending may also be set, and if the corresponding resource adjustment reply is not received within a set time after the resource adjustment request is resent m times, alarm is reported to the management control unit. Then, the management control unit issues the command of withdraw of resource adjustment to each network element in the communication path.

In this implementation manner, the first network element may send, as an upstream network element, resource adjustment request to a downstream network element adjacent thereto, i.e., the second network element, and start timing from the time when the resource adjustment request is sent. Specifically, a timer having a preset duration may be set. In the case that it is detected that the resource adjustment reply returned by the second network element is not received before the preset timer expires, the resource adjustment request may be resent to the second network element, and in the case that the resource adjustment reply returned by the second network element is still not received before the preset timer expires after the resending, it can be determined that a resource adjustment fault has occurred in the communication path. Specifically, a fault occurs when the second network element performs resource adjustment, so that alarm can be sent to the management control unit.

Alternatively, a maximum number of times of resending may be preset. In the case that the resource adjustment reply returned by the second network element is not received before the preset timer expires, the resource adjustment request may be resent to the second network element once at an interval of the preset duration, until the number of times of resending reaches the preset maximum number of times of resending, and if the resource adjustment reply returned by the second network element is still not received before the preset timer expires, alarm can be sent to the management control unit. The maximum number of times of resending may be preset according to actual requirements, and for example, may be set to 2, 3, 4, or the like.

In the case that the resource adjustment reply returned by the second network element is received before the preset timer expires after the resource adjustment request is resent, it can be determined that no fault is currently present in the communication path. The second network element may perform resource adjustment normally, and after the adjustment succeeds, resource adjustment of a next network element may be started sequentially.

In this way, in this implementation manner, the message timeout response resending mechanism is further established, so that more time and more attempts can be reserved for path resource adjustment, so as to better ensure smooth path resource adjustment, and avoid a temporary reply message timeout sometimes caused by an evanescent network failure or packet loss.

An MTN path is used below as an example to describe a specific implementation manner of establishment of the above message timeout response and resending mechanism.
1) After a certain node (i.e., a network element) in an MTN path sends a time slot request (CR) message to a downstream node, a time slot acknowledge (CA) message response timeout timer may be set to 1s. If the CA response is not received upon timeout, the CR message is resent. The maximum number of times of resending of the CR message is 3. If the CA response is not received after the CR message is resent three times, the network element reports alarm to the management control unit, and the management control unit issues a command of withdraw of time slot adjustment to each network element of the end-to-end MTN path. That is, in this manner, the resource adjustment request is the CR message, and the corresponding resource adjustment reply is the CA message.
2) In a small particle path time slot bandwidth increase adjustment process, after a certain node in the path sends a switch (S) message, a timeout timer for receiving a CR message from an upstream node is set to 1s. If the CR message is not received upon timeout, the S message is resent. The maximum number of times of resending of the S message is 3. If the CR message from the upstream node is not received after the S message is resent three times, the network element reports alarm to the management control unit, and the management control unit issues a command of withdraw of time slot adjustment to each network element of the end-to-end path. That is, in this manner, the resource adjustment request is the S message, and the corresponding resource adjustment reply is the CR message.

In some embodiments, the in the case of detecting that a resource adjustment fault has occurred in the communication path, sending alarm to the management control unit includes:
in the case that an adjustment failure occurs during resource adjustment performed by the first network element, detecting that a resource adjustment fault has occurred in the communication path, and sending the alarm to the management control unit.

In another implementation manner, each network element in the communication path may detect a resource adjustment fault thereof, and promptly report alarm to the management control unit upon detection of the same. That is, if the network element performing resource adjustment detects that an adjustment failure has occurred thereon, the network element where the adjustment failure has occurred may send alarm to the management control unit.

In this implementation manner, the first network element may be any network element in the communication path. That is, when an adjustment failure occurs on any network element in the communication path performing resource adjustment, the network element where the adjustment failure has occurred may send alarm to the management control unit.

In this way, in this implementation manner, each network element in the communication path performs detection on resource adjustment thereof, and upon detection of an adjustment failure, promptly reports alarm to cause the management control unit and each network element in the communication path to trigger an effective handling mechanism for the fault.

Upon receiving alarm sent by any network element in the communication path, the management control unit may instruct a specific network element or each network element in the communication path to cancel the resource adjustment, and specifically, may send a command indicating withdraw of resource adjustment to a fifth network element or each network element in the communication path. The fifth network element may be a network element that reports the alarm, or may be a network element in which it is indicated in the alarm that the resource adjustment fault has occurred.

That is, the management control unit may instruct, at one time, all network elements in the communication path to perform resource adjustment withdraw processing, and each network element in the communication path may cancel the current resource adjustment based on the command of withdraw of resource adjustment received thereby. The management control unit may also instruct only a specific network element such as a network element that reports the alarm or a network element where a resource adjustment fault has actually occurred (typically, the network element that reports the alarm, or an upstream network element or a downstream network element adjacent to the network element that reports the alarm) to perform resource adjustment withdraw processing, and notify other network elements to perform the resource adjustment withdraw processing via a process of sequentially passing up or down by the specific network element.

Step 102, performing withdraw processing on resource adjustment of the first network element based on the command.

In the case that the first network element receives the command of withdraw of resource adjustment, withdraw processing may be performed on resource adjustment of the first network element. That is, original resources may remain unchanged. Specifically, withdraw processing may be performed in different manners in two different cases.

That is, step 102 may include:
in the case that the first network element has finished the resource adjustment, performing resource rollback processing;
or, in the case that the first network element has not finished the resource adjustment, deleting resource adjustment configuration information.

That is, for the network element in the communication path that has finished the current resource adjustment, resource rollback processing may be performed, i.e., rollback to a resource condition before the current adjustment, so that each network element in the communication path remains in an original matched state, thereby avoiding the problem of end-to-end resource mismatch.

For a network element in the communication path that has not finished the current resource adjustment (including that the adjustment fails and that the resource adjustment has not been performed), resource rollback processing does not need to be performed, but current resource adjustment configuration information, i.e., the resource adjustment configuration information included by the management control unit in the current resource adjustment command issued to each network element in the communication path, may be deleted, so as to prevent unnecessary configuration information from remaining in the communication path to occupy communication resources.

In some embodiments, step 102 includes:
in the case that the resource adjustment is bandwidth decrease and that the first network element has finished the resource adjustment, performing adjustment processing of bandwidth increase with a third network element, wherein the third network element is in the communication path, and is upstream to the first network element;
or, in the case that the resource adjustment is bandwidth increase and that the first network element has finished the resource adjustment, performing adjustment processing of bandwidth decrease with a fourth network element, wherein the fourth network element is in the communication path, and is downstream to the first network element.

In a specific implementation manner, the embodiment of the present disclosure may be applied to a scenario in which path bandwidth resources are adjusted, and decrease or increase adjustment may be performed on bandwidth resources of the communication path.

In a scenario in which the resource adjustment is bandwidth decrease, the resource rollback processing may be, for a network element in the communication path that has finished bandwidth decrease adjustment, performing bandwidth increase processing in a reverse direction according to a bandwidth decrease adjustment direction, so as to roll the bandwidth of each network element back to the bandwidth before the decrease. Specifically, in the case that any network element among the network element in the communication path that have finished bandwidth decrease adjustment, such as the first network element, has finished the resource rollback processing, resource rollback processing may be performed with an upstream network element thereof, i.e., the third network element, that is, bandwidth increase adjustment is performed, so as to sequentially perform, section by section in an upstream direction, bandwidth increase adjustment on the network elements that have finished bandwidth decrease adjustment.

It should be noted that, in the process of performing bandwidth decrease adjustment on the communication path, the network elements in the communication path may perform bandwidth decrease adjustment one by one in a direction from the source node to a downstream node in sequence, so that when rollback processing is performed on network elements that have finished the bandwidth decrease adjustment, bandwidth increase adjustment is performed on these network elements one by one in a reverse direction from the last node (the network element that completes resource decrease adjustment last) to an upstream node in sequence.

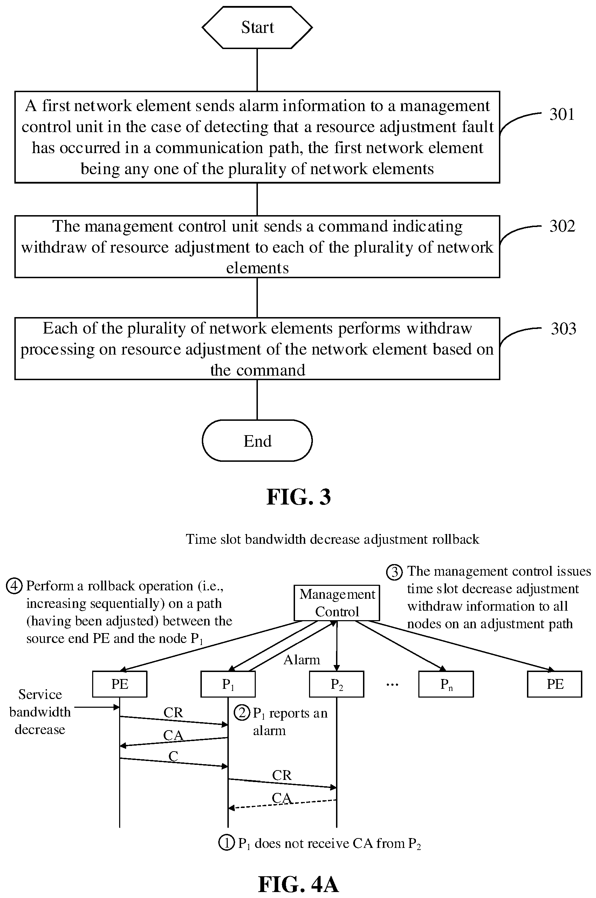

A node flowchart of resource rollback processing in a specific path time slot bandwidth decrease adjustment scenario is shown in FIG. 4A. In the signal transmission direction, the path includes a source end PE₁, a node P₁, a node P₂, ..., a node Pₙ, and a sink end PE₂. When traffic bandwidth decrease adjustment is performed, the source end PE₁ sends a CR message to the node P₁ first. Normally, upon receiving the CR message, the node P₁ returns a CA message to an upstream node thereof, i.e., the source end PE₁. Then, the source end PE₁ sends a time slot configuration (C) message to the node P₁. After decreasing the bandwidth, the node P₁ sends a CR message to a next node, i.e., the node P₂. Normally, when the node P₂ receives the CR message, the node P₂ returns a CA message to an upstream node thereof, i.e., the node P₁. However, when a fault occurs in the path, the node P₁ may not receive the CA message from the node P₂ within a predetermined duration, so that a CA message timeout response occurs, and the node P₁ sends alarm to a control (i.e., the management control unit). In this case, the source end PE₁ and the node P₁ have finished the bandwidth decrease adjustment, but the remaining nodes P₂ to Pₙ and the sink end PE₂ have not finished the bandwidth decrease adjustment, so that bandwidth increase processing needs to be performed section by section starting from the node P₁ in an upstream direction. That is, bandwidth rollback processing is performed on the node P₁ and the source end PE₁ sequentially. For the remaining nodes P₂ to Pₙ and the sink end PE₂, time slot adjustment configuration information issued by the control in the current bandwidth decrease adjustment operation is deleted.

In a scenario in which the resource adjustment is bandwidth increase, the resource rollback processing may be, for a network element in the communication path that has finished bandwidth increase adjustment, performing bandwidth decrease processing in a reverse direction according to a bandwidth increase adjustment direction, so as to roll the bandwidth of each network element back to the bandwidth before the increase. Specifically, in the case that any network element among the network element in the communication path that have finished bandwidth increase adjustment, such as the first network element, has finished the resource rollback processing, resource rollback processing may be performed with a downstream network element thereof, i.e., the fourth network element, that is, bandwidth decrease adjustment is performed, so as to sequentially perform, section by section in a downstream direction, bandwidth decrease adjustment on the network elements that have finished bandwidth increase adjustment.

It should be noted that, in the process of performing bandwidth increase adjustment on the communication path, the network elements in the communication path may perform bandwidth increase adjustment one by one in a direction from the sink node to an upstream node in sequence, so that when rollback processing is performed on network elements that have finished the bandwidth increase adjustment, bandwidth decrease adjustment is performed on these network elements one by one in a reverse direction from the first node (the network element that completes resource increase adjustment last) to a downstream node in sequence.

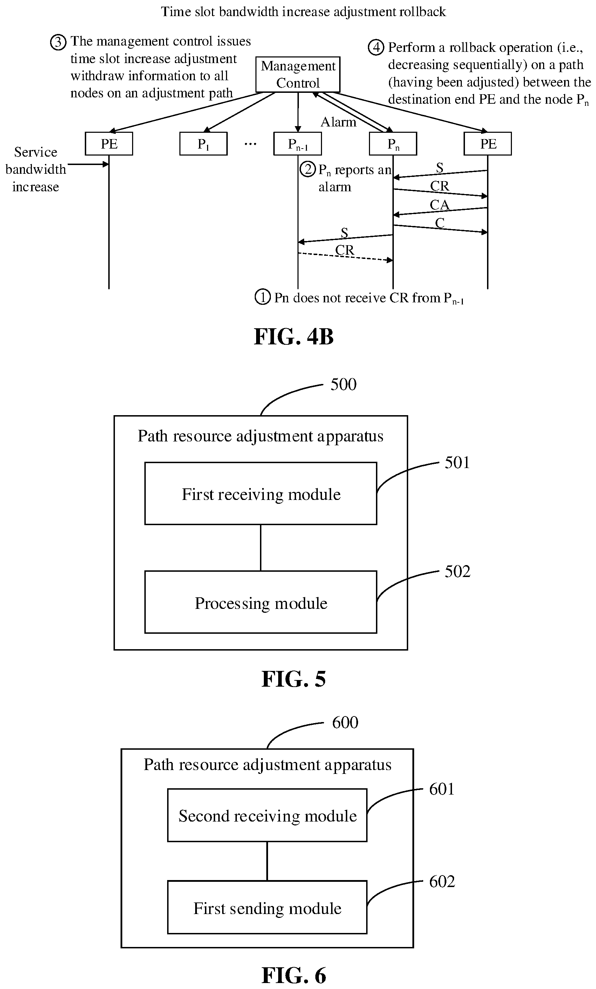

A node flowchart of resource rollback processing in a specific path time slot bandwidth increase adjustment scenario is shown in FIG. 4B. In the signal transmission direction, the path includes a source end PE₁, a node P₁, a node P₂, ..., a node Pₙ, and a sink end PE₂. When traffic bandwidth increase adjustment is performed, the sink end PE₂ sends an S message to the node Pₙ first. Normally, upon receiving the S message, the node Pₙ sends a CR message to a downstream node thereof, i.e., the sink end PE₂. Upon receiving the CR message, the sink end PE₂ returns a CA message to an upstream node thereof, i.e., the node Pₙ. Then, the node Pₙ sends a C message to the sink end PE₂. The node Pₙ sends an S message to a next node, i.e., the node Pₙ₋₁. Normally, upon receiving the S message, the node Pₙ₋₁ sends a CR message to a downstream node thereof, i.e., the node Pₙ. However, when a fault occurs in the path, the node Pₙ may not receive the CR message from the node Pₙ₋₁ within a predetermined duration, so that a CR message timeout response occurs, and the node Pₙ sends alarm to the control (i.e., the management control unit). In this case, the node Pₙ and the sink end PE₂ have finished the bandwidth increase adjustment, but the remaining nodes Pₙ₋₁ to P₁ and the source end PE₁ have not finished the bandwidth increase adjustment, so that bandwidth decrease processing needs to be performed section by section starting from the node Pₙ in a downstream direction. That is, bandwidth rollback processing is performed on the node Pₙ and the sink end PE₂ sequentially. For the remaining nodes Pₙ₋₁ to P₁ and the source end PE₁, time slot adjustment configuration information issued by the control in the current bandwidth increase adjustment operation is deleted.

In this way, in this implementation manner, it can be ensured that when bandwidth resource adjustment is performed on the communication path, resource rollback processing can be sequentially successively performed on each network element in the communication path according to a resource adjustment direction, thereby achieving lossless adjustment to the communication path, and ensuring end-to-end bandwidth resource matching in the communication path.

It should be noted that, for a bidirectional communication path, that is, two end network elements of the path may send and receive information to and from each other, the two end network elements may be both a sending end and a receiving end relative to each other. In a path time slot resource adjustment process (including a bandwidth decrease or increase adjustment process), if execution of resource adjustment of any network element among end-to-end network elements in two directions (i.e., a sending direction and a receiving direction) fails, a resource rollback process needs to be performed for both the two directions. Specifically, execution may be performed in the foregoing rollback processing manner.

The end-to-end path resource adjustment rollback method provided in the embodiment of the present disclosure can detect a path resource adjustment problem, and perform orderly and effective adjustment rollback on path resources after detection, thereby meeting technical requirements, i.e., ensuring matching of end-to-end path resources.

A path resource adjustment method according to an embodiment of the present disclosure. The path resource adjustment method is performed by a first network element in a communication path, and the communication path includes a plurality of network elements. The method includes: receiving a command indicating withdraw of resource adjustment sent by a management control unit; and performing withdraw processing on resource adjustment of the first network element based on the command. In this way, when a fault occurs during communication path resource adjustment, the management control unit issues a command indicating withdraw of resource adjustment to network elements in the communication path to cause the network elements in the communication path to cancel current resource adjustment, thereby ensuring resource matching of each network element in the communication path, and avoiding the transmission fault problem caused by a path resource mismatch.

Referring to FIG. 2, FIG. 2 is a flowchart of a path resource adjustment method provided in an embodiment of the present disclosure. The method is performed by a management control unit. The management control unit is communicatively connected to a plurality of network elements in a communication path. As shown in FIG. 2, the method includes the following steps:
Step 201, receiving alarm sent by a first network element in the case of detecting that a resource adjustment fault has occurred in the communication path, wherein the first network element is any one of the plurality of network elements.
Step 202, sending, to a fifth network element of the plurality of network elements, a command indicating withdraw of resource adjustment.

In some embodiments, step 202 includes:
sending, to each of the plurality of network elements, the command indicating withdraw of resource adjustment.

It should be noted that, this embodiment is an implementation manner on the management control unit side corresponding to the method embodiment shown in FIG. 1, and for a specific implementation manner thereof, reference may be made to related description in the foregoing embodiment. Details are not described herein again to avoid repetition.

A path resource adjustment method according to an embodiment of the present disclosure is performed by a management control unit. The management control unit is communicatively connected to a plurality of network elements in a communication path. The method includes: receiving alarm sent by a first network element in the case of detecting that a resource adjustment fault has occurred in the communication path, wherein the first network element is one of the plurality of network elements; and sending, to a fifth network element of the plurality of network elements, a command indicating withdraw of resource adjustment. In this way, when a fault occurs during communication path resource adjustment, the management control unit issues a command indicating withdraw of resource adjustment to network elements in the communication path to cause the network elements in the communication path to cancel current resource adjustment, thereby ensuring resource matching of each network element in the communication path, and avoiding the transmission fault problem caused by a path resource mismatch.

Referring to FIG. 3, FIG. 3 is a flowchart of a path resource adjustment method, which is not part of the present invention and is present for illustration purpose. The method is performed by a path resource adjustment system. The path resource adjustment system includes a management control unit and a plurality of network elements in a communication path. The management control unit is communicatively connected to the plurality of network elements in the communication path. As shown in FIG. 3, the method includes the following steps:
Step 301, sending, by a first network element, alarm to the management control unit in the case of detecting that a resource adjustment fault has occurred in the communication path, the first network element being any one of the plurality of network elements;
Step 302, sending, by the management control unit, a command indicating withdraw of resource adjustment to each of the plurality of network elements; and
Step 303, performing, by each of the plurality of network elements, withdraw processing on resource adjustment of the network element based on the command.

In some embodiments, the detecting that a resource adjustment fault has occurred in the communication path includes:
sending, by the first network element, resource adjustment request to a second network element, wherein the second network element is a network element, which is adjacent to the first network element, of the plurality of network elements;
in the case that resource adjustment reply sent by the second network element is not received before a preset timer expires, detecting, by the first network element, that a resource adjustment fault has occurred in the communication path.

In some embodiments, the detecting that a resource adjustment fault has occurred in the communication path includes:
sending, by the first network element, resource adjustment request to a second network element, wherein the second network element is a network element, which is adjacent to the first network element, of the plurality of network elements;
in the case that resource adjustment reply sent by the second network element is not received before a preset timer expires, resending, by the first network element, the resource adjustment request to the second network element; and
in the case that the number of times of resending reaches a preset number and the resource adjustment reply sent by the second network element is still not received before the preset timer expires, detecting, by the first network element, that a resource adjustment fault has occurred in the communication path.

In some embodiments, the detecting that a resource adjustment fault has occurred in the communication path includes:
in the case that an adjustment failure occurs during resource adjustment, detecting, by the first network element, that a resource adjustment fault has occurred in the communication path.

In some embodiments, step 303 includes:
performing, by a first portion of network elements having finished the resource adjustment among the plurality of network elements, resource rollback processing;
and/or, deleting, by a second portion of network elements not having finished the resource adjustment among the plurality of network elements, resource adjustment configuration information.

In some embodiments, step 303 includes:
in the case that the resource adjustment is bandwidth decrease, performing, by the first portion of network elements having finished the resource adjustment among the plurality of network elements sequentially starting from a first terminal network element in an upstream direction of the network elements, resource rollback processing until a first head network element completes the resource rollback processing, wherein the first head network element is a network element performing the bandwidth decrease adjustment first among the first portion of network elements, and the first terminal network element is a network element performing the bandwidth decrease adjustment last among the first portion of network elements, the first head network element being a source network element in a bandwidth decrease adjustment process;
or, in the case that the resource adjustment is bandwidth increase, performing, by the first portion of network elements having finished the resource adjustment among the plurality of network elements sequentially starting from a second head network element in a downstream direction of the network elements, resource rollback processing until a second terminal network element completes the resource rollback processing, wherein the second head network element is a network element performing the bandwidth increase adjustment last among the first portion of network elements, and the second terminal network element is a network element performing the bandwidth increase adjustment first among the first portion of network elements, the second terminal network element being a destination network element in a bandwidth increase adjustment process.

It should be noted that, this embodiment is an implementation manner on the system side (that is, including the network elements in the communication path and the management control unit) corresponding to the method embodiment shown in FIG. 1, and for a specific implementation manner thereof, reference may be made to related description in the foregoing embodiment. Details are not described herein again to avoid repetition.

A path resource adjustment method in an embodiment of the present disclosure is performed by a path resource adjustment system. The path resource adjustment system includes a management control unit and a plurality of network elements in a communication path. The management control unit is communicatively connected to the plurality of network elements in the communication path. The method includes: sending, by a first network element, alarm to the management control unit in the case of detecting that a resource adjustment fault has occurred in the communication path, the first network element being any one of the plurality of network elements; sending, by the management control unit, a command indicating withdraw of resource adjustment to each of the plurality of network elements; and performing, by each of the plurality of network elements, withdraw processing on resource adjustment of the network element based on the command. In this way, when a fault occurs during communication path resource adjustment, the management control unit issues a command indicating withdraw of resource adjustment to network elements in the communication path to cause the network elements in the communication path to cancel current resource adjustment, thereby ensuring resource matching of each network element in the communication path, and avoiding the transmission fault problem caused by a path resource mismatch.

Also provided in embodiments of the present disclosure is a path resource adjustment apparatus, provided in a first network element in a communication path. The communication path includes a plurality of network elements. Referring to FIG. 5, FIG. 5 is a structural diagram of a path resource adjustment apparatus provided in an embodiment of the present disclosure. The principle of the path resource adjustment apparatus that solves the problem is similar to that of the path resource adjustment method in the method embodiment shown in FIG. 1 in the embodiments of the present disclosure, so that for implementation of the path resource adjustment apparatus, reference may be made to the implementation of the method, and redundant description is omitted.

As shown in FIG. 5, a path resource adjustment apparatus 500 includes:
a first receiving module 501, configured to receive a command indicating withdraw of resource adjustment sent by a management control unit; and
a processing module 502, configured to perform withdraw processing on resource adjustment of the first network element based on the command.

In some embodiments, the path resource adjustment apparatus 500 further includes:
a second sending module, configured to, in the case of detecting that a resource adjustment fault has occurred in the communication path, send alarm to the management control unit.

In some embodiments, the path resource adjustment apparatus 500 further includes:
a third sending module, configured to send a resource adjustment request to a second network element, wherein the second network element is a network element, which is adjacent to the first network element, of the plurality of network elements,
the second sending module being configured to, in the case that a resource adjustment reply sent by the second network element is not received before a preset timer expires, detect that a resource adjustment fault has occurred in the communication path, and send the alarm to the management control unit.

In some embodiments, the second sending module is configured to:
send resource adjustment request to a second network element, wherein the second network element is a network element, which is adjacent to the first network element, of the plurality of network elements;
in the case that resource adjustment reply sent by the second network element is not received before a preset timer expires, resend the resource adjustment request to the second network element; and
in the case that the number of times of resending reaches a preset number and the resource adjustment reply sent by the second network element is still not received before the preset timer expires, detect that a resource adjustment fault has occurred in the communication path, and send the alarm to the management control unit.

In some embodiments, the second sending module is configured to, in the case that an adjustment failure occurs during resource adjustment performed by the first network element, send alarm to the management control unit.

In some embodiments, the processing module 502 is configured to, in the case that the first network element has finished the resource adjustment, perform resource rollback processing;
or, the processing module 502 is configured to, in the case that the first network element has not finished the resource adjustment, delete resource adjustment configuration information.

In some embodiments, the processing module 502 is configured to, in the case that the resource adjustment is bandwidth decrease and that the first network element has finished the resource adjustment, perform adjustment processing of bandwidth increase with a third network element, wherein the third network element is in the communication path, and is upstream to the first network element;
or, the processing module 502 is configured to, in the case that the resource adjustment is bandwidth increase and that the first network element has finished the resource adjustment, perform adjustment processing of bandwidth decrease with a fourth network element, wherein the fourth network element is in the communication path, and is downstream to the first network element.

The path resource adjustment apparatus provided in the embodiment of the present disclosure can perform the method embodiment shown in FIG. 1, and has a similar implementation principle and technical effect, and details are not described here in this embodiment again.

The path resource adjustment apparatus 500 according to the embodiment of the present disclosure receives a command indicating withdraw of resource adjustment sent by a management control unit, and performs withdraw processing on resource adjustment of the first network element based on the command. In this way, when a fault occurs during communication path resource adjustment, the management control unit issues a command indicating withdraw of resource adjustment to network elements in the communication path to cause the network elements in the communication path to cancel current resource adjustment, thereby ensuring resource matching of each network element in the communication path, and avoiding the transmission fault problem caused by a path resource mismatch.

Also provided in embodiments of the present disclosure is another path resource adjustment apparatus provided in a management control unit. The management control unit is communicatively connected to a plurality of network elements in a communication path. Referring to FIG. 6, FIG. 6 is a structural diagram of a path resource adjustment apparatus provided in an embodiment of the present disclosure. The principle of the path resource adjustment apparatus that solves the problem is similar to that of the path resource adjustment method in the embodiment shown in FIG. 2 in the embodiments of the present disclosure, so that for implementation of the path resource adjustment apparatus, reference may be made to the implementation of the method, and redundant description is omitted.

As shown in FIG. 6, a path resource adjustment apparatus 600 includes:
a second receiving module 601, configured to receive alarm sent by a first network element in the case of detecting that a resource adjustment fault has occurred in the communication path, wherein the first network element is any one of the plurality of network elements; and
a first sending module 602, configured to send, to a fifth network element of the plurality of network elements, a command indicating withdraw of resource adjustment.

In some embodiments, the first sending module 602 is configured to send, to each of the plurality of network elements, a command indicating withdraw of resource adjustment.

The path resource adjustment apparatus provided in the embodiment of the present disclosure can perform the method embodiment shown in FIG. 2, and has a similar implementation principle and technical effect, and details are not described here in this embodiment again.

The path resource adjustment apparatus 500 according to the embodiment of the present disclosure receives alarm sent by a first network element in the case of detecting that a resource adjustment fault has occurred in the communication path, wherein the first network element is one of the plurality of network elements, and sends, to a fifth network element of the plurality of network elements, a command indicating withdraw of resource adjustment. In this way, when a fault occurs during communication path resource adjustment, the management control unit issues a command indicating withdraw of resource adjustment to network elements in the communication path to cause the network elements in the communication path to cancel current resource adjustment, thereby ensuring resource matching of each network element in the communication path, and avoiding the transmission fault problem caused by a path resource mismatch.

Also provided in embodiments of the present disclosure is a communication device. The principle of the communication device that solves the problem is similar to that of the path resource adjustment method in the embodiments of the present disclosure, so that for implementation of the communication device, reference may be made to the implementation of the method, and redundant description is omitted.

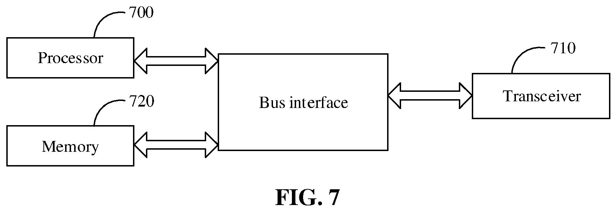

In an implementation manner, the communication device according to the embodiment of the present disclosure may be a first network element in a communication path. The communication path includes a plurality of network elements. As shown in FIG. 7, in this implementation manner, the communication device includes:
a processor 700, configured to read a program in a memory 720 to perform the following procedure:
receiving, by means of a transceiver 710, a command indicating withdraw of resource adjustment sent by a management control unit; and
performing withdraw processing on resource adjustment of the first network element based on the command.

The transceiver 710 is configured to receive and send data under the control of the processor 700.

In FIG. 7, a bus architecture may include any number of interconnecting buses and bridges specifically connected together by various circuits of one or more processors represented by the processor 700 and the memory represented by the memory 720. The bus architecture may also link various other circuits such as peripherals, voltage regulators, and power management circuits, which are well known in the art, and therefore, will not be described any further herein. A bus interface provides an interface. The transceiver 710 may be a plurality of elements, that is, including a transmitter and a transceiver, and provides a unit for communicating with various other apparatus over a transmission medium. The processor 700 is responsible for managing the bus architecture and general processing, and the memory 720 may store data used by the processor 700 performing operations.

In some embodiments, the processor 700 is further configured to read the program in the memory 720 to perform the following steps:
in the case of detecting that a resource adjustment fault has occurred in the communication path, sending, by means of the transceiver 710, alarm to the management control unit.

In some embodiments, the processor 700 is further configured to read the program in the memory 720 to perform the following steps:
sending, by means of the transceiver 710, resource adjustment request to a second network element, wherein the second network element is a network element, which is adjacent to the first network element, of the plurality of network elements;
in the case that resource adjustment reply sent by the second network element is not received before a preset timer expires, detecting that a resource adjustment fault has occurred in the communication path, and sending, by means of the transceiver 710, the alarm to the management control unit.

In some embodiments, the processor 700 is further configured to read the program in the memory 720 to perform the following steps:
sending, by means of the transceiver 710, resource adjustment request to a second network element, wherein the second network element is a network element, which is adjacent to the first network element, of the plurality of network elements;
in the case that resource adjustment reply sent by the second network element is not received before a preset timer expires, resending, by means of the transceiver 710, the resource adjustment request to the second network element; and
in the case that the number of times of resending reaches a preset number and the resource adjustment reply sent by the second network element is still not received before the preset timer expires, sending, by means of the transceiver 710, the alarm to the management control unit.

In some embodiments, the processor 700 is further configured to read the program in the memory 720 to perform the following steps:
in the case that an adjustment failure occurs during resource adjustment performed by the first network element, detecting that a resource adjustment fault has occurred in the communication path, and sending, by means of the transceiver 710, the alarm to the management control unit.

In some embodiments, the processor 700 is further configured to read the program in the memory 720 to perform the following steps:
in the case that the first network element has finished the resource adjustment, performing resource rollback processing;
or, in the case that the first network element has not finished the resource adjustment, deleting resource adjustment configuration information.

In some embodiments, the processor 700 is further configured to read the program in the memory 720 to perform the following steps:
in the case that the resource adjustment is bandwidth decrease and that the first network element has finished the resource adjustment, performing adjustment processing of bandwidth increase with a third network element, wherein the third network element is in the communication path, and is upstream to the first network element;
or, in the case that the resource adjustment is bandwidth increase and that the first network element has finished the resource adjustment, performing adjustment processing of bandwidth decrease with a fourth network element, wherein the fourth network element is in the communication path, and is downstream to the first network element.

In another implementation manner, the communication device according to the embodiment of the present disclosure may be a management control unit. The management control unit is communicatively connected to a plurality of network elements in a communication path. In this implementation manner, the communication device includes:
a processor 700, configured to read a program in a memory 720 to perform the following procedure:
receiving, by means of a transceiver 710, alarm sent by a first network element in the case of detecting that a resource adjustment fault has occurred in the communication path, wherein the first network element is any one of the plurality of network elements; and
sending, to a fifth network element of the plurality of network elements via the transceiver 710, a command indicating withdraw of resource adjustment,

The transceiver 710 is configured to receive and send data under the control of the processor 700.

In some embodiments, the processor 700 is further configured to read the program in the memory 720 to perform the following steps:
sending, to each network element in the communication path, the command indicating withdraw of resource adjustment.

The communication device provided in the embodiment of the present disclosure can perform the above method embodiment, and has a similar implementation principle and technical effect, and details are not described here in this embodiment again.

In addition, a computer-readable storage medium according to an embodiment of the present disclosure is configured to store a computer program. The computer program may be executed by a processor to implement the steps in the method embodiment shown in FIG. 1, FIG. 2, or FIG. 3.

In several embodiments provided by the present disclosure, it should be understood that the disclosed methods and apparatuses may be implemented in other manners. For example, the apparatus embodiments described above are merely illustrative. For example, the division of the units is only a logical function division. During actual implementation, there may be other division methods. For example, a plurality of units or components may be combined or integrated into another system, or some features may be ignored or not implemented. Furthermore, the displayed or discussed coupling or direct coupling or communication connections may be by means of some interfaces, and the indirect coupling or communication connections of apparatuses or units may be in electrical, mechanical or other forms.

In addition, the functional units in various embodiments of the present disclosure may be integrated in one processing unit, or each unit may be individually physically included, or two or more units may be integrated into one unit. The integrated units described above may be implemented in the form of hardware or in the form of hardware plus software functional units.

The above integrated units implemented in the form of software function units may be stored in a computer-readable storage medium. The above software function units may be stored in a storage medium, including several instructions for causing a computer device (which may be a personal computer, a server, a network device, or the like) to perform some steps of the sending and receiving methods described in the various embodiments of the present disclosure. The foregoing storage medium includes: a U disk, a mobile hard disk, a Read Only Memory (ROM), a Random Access Memory (RAM), a magnetic disk, an optical disk, or other media that can store program codes.

## Claims

1. A path resource adjustment method, performed by a first network element in a communication path, the communication path comprising a plurality of network elements, the method comprising:
receiving (101) a command indicating withdraw of resource adjustment sent by a management control unit; and
performing (102) withdraw processing on resource adjustment of the first network element based on the command,
**characterized in that** the resource adjustment comprises bandwidth adjustment;
wherein the performing (102) withdraw processing on resource adjustment of the first network element based on the command comprises:
in the case that the resource adjustment is bandwidth decrease and that the first network element has finished the resource adjustment, performing adjustment processing of bandwidth increase with a third network element, wherein the third network element is in the communication path, and is upstream to the first network element; or
in the case that the resource adjustment is bandwidth increase and that the first network element has finished the resource adjustment, performing adjustment processing of bandwidth decrease with a fourth network element, wherein the fourth network element is in the communication path, and is downstream to the first network element.

2. The method of claim 1, wherein before the receiving a command indicating withdraw of resource adjustment sent by a management control unit, the method further comprises:
in the case of detecting that a resource adjustment fault has occurred in the communication path, sending alarm to the management control unit.

3. The method of claim 2, wherein the detecting that a resource adjustment fault has occurred in the communication path comprises:
sending resource adjustment request to a second network element, wherein the second network element is a network element, which is adjacent to the first network element, of the plurality of network elements; and
in the case that resource adjustment reply sent by the second network element is not received before a preset timer expires, detecting that the resource adjustment fault has occurred in the communication path.

4. The method of claim 2, wherein the detecting that a resource adjustment fault has occurred in the communication path comprises:
sending resource adjustment request to a second network element, wherein the second network element is a network element, which is adjacent to the first network element, of the plurality of network elements;
in the case that resource adjustment reply sent by the second network element is not received before a preset timer expires, resending the resource adjustment request to the second network element; and
in the case that a number of times of resending reaches a preset number and the resource adjustment reply sent by the second network element is still not received before the preset timer expires, detecting that the resource adjustment fault has occurred in the communication path.

5. The method of claim 2, wherein the detecting that a resource adjustment fault has occurred in the communication path comprises:
in the case that an adjustment failure occurs during resource adjustment performed by the first network element, detecting that the resource adjustment fault has occurred in the communication path.

6. The method of any one of claims 1 to 5, wherein the performing withdraw processing on resource adjustment of the first network element based on the command comprises:
in the case that the first network element has finished the resource adjustment, performing resource rollback processing; or
in the case that the first network element has not finished the resource adjustment, deleting resource adjustment configuration information.

7. A path resource adjustment method, performed by a management control unit, the management control unit being communicatively connected to a plurality of network elements in a communication path, the method comprising:
receiving (201) alarm, which is sent by a first network element in the case of detecting that a resource adjustment fault has occurred in the communication path, wherein the first network element is any one of the plurality of network elements; and
sending (202), to a fifth network element of the plurality of network elements, a command indicating withdraw of resource adjustment,
**characterized in that** the resource adjustment comprises bandwidth adjustment;
wherein the command indicating withdraw of resource adjustment is configured to indicate the fifth network element to:
perform adjustment processing of bandwidth increase with a third network element in the case that the resource adjustment is bandwidth decrease and that the fifth network element has finished the resource adjustment, wherein the third network element is in the communication path, and is upstream to the fifth network element; or
perform adjustment processing of bandwidth decrease with a fourth network element in the case that the resource adjustment is bandwidth increase and that the fifth network element has finished the resource adjustment, wherein the fourth network element is in the communication path, and is downstream to the fifth network element.

8. The method of claim 7, wherein the sending, to a fifth network element of the plurality of network elements, a command indicating withdraw of resource adjustment comprises:
sending, to each of the plurality of network elements, the command indicating withdraw of resource adjustment.

9. A path resource adjustment apparatus (500), provided in a first network element in a communication path, the communication path comprising a plurality of network elements, the path resource adjustment apparatus comprising:
a first receiving module (501), configured to receive a command indicating withdraw of resource adjustment sent by a management control unit; and
a processing module (502), configured to perform withdraw processing on resource adjustment of the first network element based on the command,
**characterized in that** the resource adjustment comprises bandwidth adjustment;
wherein the processing module (502) is further configured to:
in the case that the resource adjustment is bandwidth decrease and that the first network element has finished the resource adjustment, perform adjustment processing of bandwidth increase with a third network element, wherein the third network element is in the communication path, and is upstream to the first network element; or
in the case that the resource adjustment is bandwidth increase and that the first network element has finished the resource adjustment, perform adjustment processing of bandwidth decrease with a fourth network element, wherein the fourth network element is in the communication path, and is downstream to the first network element.

10. A path resource adjustment apparatus (600), provided in a management control unit, the management control unit being communicatively connected to a plurality of network elements in a communication path, the path resource adjustment apparatus comprising:
a second receiving module (601), configured to receive alarm sent by a first network element in the case of detecting that a resource adjustment fault has occurred in the communication path, wherein the first network element is any one of the plurality of network elements; and
a first sending module (602), configured to send, to a fifth network element of the plurality of network elements, a command indicating withdraw of resource adjustment,
**characterized in that** the resource adjustment comprises bandwidth adjustment;
wherein the command indicating withdraw of resource adjustment is configured to indicate the fifth network element to:
perform adjustment processing of bandwidth increase with a third network element in the case that the resource adjustment is bandwidth decrease and that the fifth network element has finished the resource adjustment, wherein the third network element is in the communication path, and is upstream to the fifth network element; or
perform adjustment processing of bandwidth decrease with a fourth network element in the case that the resource adjustment is bandwidth increase and that the fifth network element has finished the resource adjustment, wherein the fourth network element is in the communication path, and is downstream to the fifth network element.

11. A communication device, comprising: a transceiver, a memory, a processor, and a computer program stored on the memory and executable on the processor, the processor being configured to read the program in the memory to implement steps in the path resource adjustment method of any one of claims 1 to 6.

12. A communication device, comprising: a transceiver, a memory, a processor, and a computer program stored on the memory and executable on the processor, the processor being configured to read the program in the memory to implement steps in the path resource adjustment method of claim 7 or 8.

13. A computer-readable storage medium, configured to store a computer program, the computer program, when executed by a processor, implementing steps in the path resource adjustment method of any one of claims 1 to 6.

14. A computer-readable storage medium, configured to store a computer program, the computer program, when executed by a processor, implementing steps in the path resource adjustment method of claim 7 or 8.

## Patentansprüche

1. Verfahren zur Pfadressourcenanpassung, durchgeführt durch ein erstes Netzwerkelement in einem Kommunikationspfad, der Kommunikationspfad umfassend eine Vielzahl von Netzwerkelementen, das Verfahren umfassend:
Empfangen (101) eines Befehls, der ein Rückruf einer Ressourcenanpassung angibt, der durch eine Verwaltungssteuereinheit gesendet wird; und
Durchführen (102) eines Rückrufverarbeitens bei der Ressourcenanpassung des ersten Netzwerkelements basierend auf dem Befehl,
**dadurch gekennzeichnet, dass** die Ressourcenanpassung eine Bandbreitenanpassung umfasst;
wobei das Durchführen (102) eines Rückrufverarbeitens bei der Ressourcenanpassung des ersten Netzwerkelements basierend auf dem Befehl umfasst:
in dem Fall, dass die Ressourcenanpassung eine Bandbreitenverringerung ist und dass das erste Netzwerkelement die Ressourcenanpassung beendet hat, Durchführen eines Anpassungsverarbeitens einer Bandbreitenerhöhung mit einem dritten Netzwerkelement, wobei das dritte Netzwerkelement in dem Kommunikationspfad ist und stromaufwärtig zu dem ersten Netzwerkelement ist; oder
in dem Fall, dass die Ressourcenanpassung eine Bandbreitenerhöhung ist und dass das erste Netzwerkelement die Ressourcenanpassung beendet hat, Durchführen einer Anpassungsverarbeitung einer Bandbreitenverringerung mit einem vierten Netzwerkelement, wobei das vierte Netzwerkelement in dem Kommunikationspfad ist und stromabwärtig zu dem ersten Netzwerkelement ist.

2. Verfahren nach Anspruch 1, wobei vor dem Empfangen eines Befehls, der einen Rückruf einer Ressourcenanpassung angibt, der durch eine Verwaltungssteuereinheit gesendet wird, das Verfahren ferner umfasst:
in dem Fall des Erkennens, dass ein Ressourcenanpassungsfehler in dem Kommunikationspfad aufgetreten ist, Senden eines Alarms an die Verwaltungssteuereinheit.

3. Verfahren nach Anspruch 2, wobei das Erkennen, dass ein Ressourcenanpassungsfehler in dem Kommunikationspfad aufgetreten ist, umfasst:
Senden einer Ressourcenanpassungsanfrage an ein zweites Netzwerkelement, wobei das zweite Netzwerkelement ein Netzwerkelement ist, das zu dem ersten Netzwerkelement benachbart ist, der Vielzahl von Netzwerkelementen; und
in dem Fall, dass eine Ressourcenanpassungsantwort, die durch das zweite Netzwerkelement gesendet wird, nicht empfangen wird, bevor ein voreingestellter Zeitgeber abläuft, Erkennen, dass der Ressourcenanpassungsfehler in dem Kommunikationspfad aufgetreten ist.

4. Verfahren nach Anspruch 2, wobei das Erkennen, dass ein Ressourcenanpassungsfehler in dem Kommunikationspfad aufgetreten ist, umfasst:
Senden einer Ressourcenanpassungsanfrage an ein zweites Netzwerkelement, wobei das zweite Netzwerkelement ein Netzwerkelement ist, das zu dem ersten Netzwerkelement benachbart ist, der Vielzahl von Netzwerkelementen;
in dem Fall, dass eine Ressourcenanpassungsantwort, die durch das zweite Netzwerkelement gesendet wird, nicht empfangen wird, bevor ein voreingestellter Zeitgeber abläuft, erneutes Senden der Ressourcenanpassungsanfrage an das zweite Netzwerkelement; und
in dem Fall, dass eine Anzahl von erneuten Sendungen eine voreingestellte Anzahl erreicht und die Ressourcenanpassungsantwort, die durch das zweite Netzwerkelement gesendet wird, noch nicht empfangen wird, bevor der voreingestellte Zeitgeber abläuft, Erkennen, dass der Ressourcenanpassungsfehler in dem Kommunikationspfad aufgetreten ist.

5. Verfahren nach Anspruch 2, wobei das Erkennen, dass ein Ressourcenanpassungsfehler in dem Kommunikationspfad aufgetreten ist, umfasst:
in dem Fall, dass ein Anpassungsfehler während der Ressourcenanpassung auftritt, die durch das erste Netzwerkelement durchgeführt wird, Erkennen, dass der Ressourcenanpassungsfehler in dem Kommunikationspfad aufgetreten ist.

6. Verfahren nach einem der Ansprüche 1 bis 5, wobei das Durchführen eines Rückrufverarbeitens bei der Ressourcenanpassung des ersten Netzwerkelements basierend auf dem Befehl umfasst:
für den Fall, dass das erste Netzwerkelement die Ressourcenanpassung abgeschlossen hat, Durchführen eines Ressourcen-Rollback-Verarbeitens; oder
für den Fall, dass das erste Netzwerkelement die Ressourcenanpassung nicht abgeschlossen hat, Löschen von Ressourcenanpassungskonfigurationsinformationen.

7. Pfadressourcenanpassungsverfahren, durchgeführt durch eine Verwaltungssteuereinheit, wobei die Verwaltungssteuereinheit mit einer Vielzahl von Netzwerkelementen in einem Kommunikationspfad kommunikativ verbunden ist, das Verfahren umfassend:
Empfangen (201) eines Alarms, der durch ein erstes Netzwerkelement gesendet wird, in dem Fall des Erkennens, dass ein Ressourcenanpassungsfehler in dem Kommunikationspfad aufgetreten ist, wobei das erste Netzwerkelement ein beliebiges der Vielzahl von Netzwerkelementen ist; und
Senden (202), an ein fünftes Netzwerkelement der Vielzahl von Netzwerkelementen, eines Befehls, der den Rückruf einer Ressourcenanpassung angibt,
**dadurch gekennzeichnet, dass** die Ressourcenanpassung eine Bandbreitenanpassung umfasst;
wobei der Befehl, der den Rückruf der Ressourcenanpassung angibt, konfiguriert ist, um dem fünften Netzwerkelement Folgendes anzugeben:
Durchführen eines Anpassungsverarbeitens einer Bandbreitenerhöhung mit einem dritten Netzwerkelement in dem Fall, dass die Ressourcenanpassung eine Bandbreitenverringerung ist und dass das fünfte Netzwerkelement die Ressourcenanpassung beendet hat, wobei das dritte Netzwerkelement in dem Kommunikationspfad ist und stromaufwärtig zu dem fünften Netzwerkelement ist; oder
Durchführen eines Anpassungsverarbeitens einer Bandbreitenverringerung mit einem vierten Netzwerkelement in dem Fall, dass die Ressourcenanpassung eine Bandbreitenerhöhung ist und dass das fünfte Netzwerkelement die Ressourcenanpassung beendet hat, wobei das vierte Netzwerkelement in dem Kommunikationspfad ist und stromabwärtig zu dem fünften Netzwerkelement ist.

8. Verfahren nach Anspruch 7, wobei das Senden, an ein fünftes Netzwerkelement der Vielzahl von Netzwerkelementen, eines Befehls, der einen Rückruf einer Ressourcenanpassung angibt, umfasst:
Senden, an jedes der Vielzahl von Netzwerkelementen, des Befehls, der den Rückruf der Ressourcenanpassung angibt.

9. Pfadressourcenanpassungseinrichtung (500), bereitgestellt in einem ersten Netzwerkelement in einem Kommunikationspfad, der Kommunikationspfad umfassend eine Vielzahl von Netzwerkelementen, die Pfadressourcenanpassungseinrichtung umfassend:
ein erstes Empfangsmodul (501), das konfiguriert ist, um einen Befehl zu empfangen, der einen Rückruf einer Ressourcenanpassung angibt, der durch eine Verwaltungssteuereinheit gesendet wird; und
ein Verarbeitungsmodul (502), das konfiguriert ist, um ein Rückrufverarbeiten bei der Ressourcenanpassung des ersten Netzwerkelements basierend auf dem Befehl durchzuführen,
**dadurch gekennzeichnet, dass** die Ressourcenanpassung eine Bandbreitenanpassung umfasst;
wobei das Verarbeitungsmodul (502) ferner konfiguriert ist zum:
in dem Fall, dass die Ressourcenanpassung eine Bandbreitenverringerung ist, und dass das erste Netzwerkelement die Ressourcenanpassung beendet hat, Durchführen einer Anpassungsverarbeitung einer Bandbreitenerhöhung mit einem dritten Netzwerkelement, wobei das dritte Netzwerkelement in dem Kommunikationspfad ist und stromaufwärtig zu dem ersten Netzwerkelement ist; oder
in dem Fall, dass die Ressourcenanpassung eine Bandbreitenerhöhung ist, und dass das erste Netzwerkelement die Ressourcenanpassung beendet hat, Durchführen eines Anpassungsverarbeitens einer Bandbreitenverringerung mit einem vierten Netzwerkelement, wobei das vierte Netzwerkelement in dem Kommunikationspfad ist und stromabwärtig zu dem ersten Netzwerkelement ist.

10. Pfadressourcenanpassungseinrichtung (600), bereitgestellt in einer Verwaltungssteuereinheit, wobei die Verwaltungssteuereinheit mit einer Vielzahl Netzwerkelementen in einem Kommunikationspfad kommunikativ verbunden ist, die Pfadressourcenanpassungseinrichtung umfassend:
ein zweites Empfangsmodul (601), das konfiguriert ist, um einen Alarm zu empfangen, der durch ein erstes Netzwerkelement gesendet wird, in dem Fall des Erkennens, dass ein Ressourcenanpassungsfehler in dem Kommunikationspfad aufgetreten ist, wobei das erste Netzwerkelement ein beliebiges der Vielzahl von Netzwerkelementen ist; und
ein erstes Sendemodul (602), das konfiguriert ist, um an ein fünftes Netzwerkelement der Vielzahl von Netzwerkelementen einen Befehl zu senden, der einen Rückruf einer Ressourcenanpassung angibt,
**dadurch gekennzeichnet, dass** die Ressourcenanpassung eine Bandbreitenanpassung umfasst;
wobei der Befehl, der den Rückruf der Ressourcenanpassung angibt, konfiguriert ist, um dem fünften Netzwerkelement Folgendes anzugeben:
Durchführen eines Anpassungsverarbeitens einer Bandbreitenerhöhung mit einem dritten Netzwerkelement in dem Fall, dass die Ressourcenanpassung eine Bandbreitenverringerung ist und dass das fünfte Netzwerkelement die Ressourcenanpassung beendet hat, wobei das dritte Netzwerkelement in dem Kommunikationspfad ist und stromaufwärtig zu dem fünften Netzwerkelement ist; oder
Durchführen eines Anpassungsverarbeitens einer Bandbreitenverringerung mit einem vierten Netzwerkelement in dem Fall, dass die Ressourcenanpassung eine Bandbreitenerhöhung ist und dass das fünfte Netzwerkelement die Ressourcenanpassung beendet hat, wobei das vierte Netzwerkelement in dem Kommunikationspfad ist und stromabwärtig zu dem fünften Netzwerkelement ist.

11. Kommunikationsvorrichtung, umfassend: einen Sendeempfänger, einen Speicher, einen Prozessor und ein auf dem Speicher gespeichertes und auf dem Prozessor ausführbares Computerprogramm, wobei der Prozessor konfiguriert ist, um das Programm in dem Speicher zu lesen, um Schritte in dem Pfadressourcenanpassungsverfahren nach einem der Ansprüche 1 bis 6 zu implementieren.

12. Kommunikationsvorrichtung, umfassend: einen Sendeempfänger, einen Speicher, einen Prozessor und ein auf dem Speicher gespeichertes und auf dem Prozessor ausführbares Computerprogramm, wobei der Prozessor konfiguriert ist, um das Programm in dem Speicher zu lesen, um Schritte in dem Pfadressourcenanpassungsverfahren nach Anspruch 7 oder 8 zu implementieren.

13. Computerlesbares Speichermedium, das konfiguriert ist, um ein Computerprogramm zu speichern, wobei das Computerprogramm, wenn es durch einen Prozessor ausgeführt wird, Schritte in dem Pfadressourcenanpassungsverfahren nach einem der Ansprüche 1 bis 6 implementiert.

14. Computerlesbares Speichermedium, das konfiguriert ist, um ein Computerprogramm zu speichern, wobei das Computerprogramm, wenn es durch einen Prozessor ausgeführt wird, Schritte in dem Pfadressourcenanpassungsverfahren nach Anspruch 7 oder 8 implementiert.

## Revendications

1. Procédé d'ajustement de ressource de chemin, réalisé par un premier élément de réseau dans un chemin de communication, le chemin de communication comprenant une pluralité d'éléments de réseau, le procédé comprenant :
la réception (101) d'un ordre indiquant de retirer un ajustement de ressource envoyé par une unité de commande de gestion ; et
la réalisation (102) d'un traitement de retrait sur un ajustement de ressource du premier élément de réseau sur la base de l'ordre,
**caractérisé en ce que** l'ajustement de ressource comprend un ajustement de largeur de bande ;
dans lequel la réalisation (102) d'un traitement de retrait sur l'ajustement de ressource du premier élément de réseau sur la base de l'ordre comprend :
dans le cas où l'ajustement de ressource est une diminution de largeur de bande et que le premier élément de réseau a terminé l'ajustement de ressource, la réalisation d'un traitement d'ajustement d'augmentation de largeur de bande avec un troisième élément de réseau, dans lequel le troisième élément de réseau est dans le chemin de communication et est en amont du premier élément de réseau ; ou
dans le cas où l'ajustement de ressource est une augmentation de largeur de bande et que le premier élément de réseau a terminé l'ajustement de ressource, la réalisation d'un traitement d'ajustement de diminution de largeur de bande avec un quatrième élément de réseau, dans lequel le quatrième élément de réseau est dans le chemin de communication et est en aval du premier élément de réseau.

2. Procédé selon la revendication 1, dans lequel, avant la réception d'un ordre indiquant de retirer un ajustement de ressource envoyé par une unité de commande de gestion, le procédé comprend en outre :
dans le cas où **il** est détecté qu'une défaillance d'ajustement de ressource s'est produite dans le chemin de communication, l'envoi d'une alarme à l'unité de commande de gestion.

3. Procédé selon la revendication 2, dans lequel le fait de détecter qu'une défaillance d'ajustement de ressource s'est produite dans le chemin de communication comprend :
l'envoi d'une demande d'ajustement de ressource à un deuxième élément de réseau, dans lequel le deuxième élément de réseau est un élément de réseau, qui est adjacent au premier élément de réseau, de la pluralité d'éléments de réseau ; et
dans le cas où la réponse d'ajustement de ressource envoyée par le deuxième élément de réseau n'est pas reçue avant l'expiration d'un temporisateur préréglé, le fait de détecter que la défaillance d'ajustement de ressource s'est produite dans le chemin de communication.

4. Procédé selon la revendication 2, dans lequel le fait de détecter qu'une défaillance d'ajustement de ressource s'est produite dans le chemin de communication comprend :
l'envoi d'une demande d'ajustement de ressource à un deuxième élément de réseau, dans lequel le deuxième élément de réseau est un élément de réseau, qui est adjacent au premier élément de réseau, de la pluralité d'éléments de réseau ;
dans le cas où la réponse d'ajustement de ressource envoyée par le deuxième élément de réseau n'est pas reçue avant l'expiration d'un temporisateur préréglé, le renvoi de la demande d'ajustement de ressource au deuxième élément de réseau ; et
dans le cas où un nombre de fois de renvoi atteint un nombre prédéfini et que la réponse d'ajustement de ressource envoyée par le deuxième élément de réseau n'est toujours pas reçue avant l'expiration du temporisateur prédéfini, le fait de détecter que la défaillance d'ajustement de ressource s'est produite dans le chemin de communication.

5. Procédé selon la revendication 2, dans lequel le fait de détecter qu'une défaillance d'ajustement de ressource s'est produite dans le chemin de communication comprend :
dans le cas où une défaillance d'ajustement se produit pendant un ajustement de ressource réalisé par le premier élément de réseau, le fait de détecter que la défaillance d'ajustement de ressource s'est produite dans le chemin de communication.

6. Procédé selon l'une quelconque des revendications 1 à 5, dans lequel la réalisation d'un traitement de retrait sur un ajustement de ressource du premier élément de réseau sur la base de l'ordre comprend :
dans le cas où le premier élément de réseau a terminé l'ajustement de ressource, la réalisation d'un traitement de restauration de ressource ; ou
dans le cas où le premier élément de réseau n'a pas terminé l'ajustement de ressource, la suppression d'informations de configuration d'ajustement de ressource.

7. Procédé d'ajustement de ressource de chemin, réalisé par une unité de commande de gestion, l'unité de commande de gestion étant connectée en communication à une pluralité d'éléments de réseau dans un chemin de communication, le procédé comprenant :
la réception (201) d'une alarme, qui est envoyée par un premier élément de réseau dans le cas où il est détecté qu'une défaillance d'ajustement de ressource s'est produite dans le chemin de communication, dans lequel le premier élément de réseau est l'un quelconque parmi la pluralité d'éléments de réseau ; et
l'envoi (202), à un cinquième élément de réseau de la pluralité d'éléments de réseau, d'un ordre indiquant de retirer un ajustement de ressource,
**caractérisé en ce que** l'ajustement de ressource comprend un ajustement de largeur de bande ;
dans lequel l'ordre indiquant de retirer un ajustement de ressource est configuré pour indiquer au cinquième élément de réseau de :
réaliser un traitement d'ajustement d'augmentation de largeur de bande avec un troisième élément de réseau dans le cas où l'ajustement de ressource est une diminution de largeur de bande et que le cinquième élément de réseau a terminé l'ajustement de ressource, dans lequel le troisième élément de réseau est dans le chemin de communication et est en amont du cinquième élément de réseau ; ou
réaliser un traitement d'ajustement de diminution de largeur de bande avec un quatrième élément de réseau dans le cas où l'ajustement de ressource est une augmentation de largeur de bande et que le cinquième élément de réseau a terminé l'ajustement de ressource, dans lequel le quatrième élément de réseau est dans le chemin de communication et est en aval du cinquième élément de réseau.

8. Procédé selon la revendication 7, dans lequel l'envoi, à un cinquième élément de réseau de la pluralité d'éléments de réseau, d'un ordre indiquant de retirer un ajustement de ressource comprend :
l'envoi, à chacun parmi la pluralité d'éléments de réseau, de l'ordre indiquant de retirer un ajustement de ressource.

9. Appareil d'ajustement de ressource de chemin (500), fourni dans un premier élément de réseau dans un chemin de communication, le chemin de communication comprenant une pluralité d'éléments de réseau, l'appareil d'ajustement de ressource de chemin comprenant :
un premier module de réception (501), configuré pour recevoir un ordre indiquant de retirer un ajustement de ressource envoyé par une unité de commande de gestion ; et
un module de traitement (502), configuré pour réaliser un traitement de retrait sur un ajustement de ressource du premier élément de réseau sur la base de l'ordre,
**caractérisé en ce que** l'ajustement de ressource comprend un ajustement de largeur de bande ;
dans lequel le module de traitement (502) est en outre configurée pour :
dans le cas où l'ajustement de ressource est une diminution de largeur de bande et que le premier élément de réseau a terminé l'ajustement de ressource, réaliser un traitement d'ajustement d'augmentation de largeur de bande avec un troisième élément de réseau, dans lequel le troisième élément de réseau est dans le chemin de communication et est en amont du premier élément de réseau ; ou
dans le cas où l'ajustement de ressource est une augmentation de largeur de bande et que le premier élément de réseau a terminé l'ajustement de ressource, réaliser un traitement d'ajustement de diminution de largeur de bande avec un quatrième élément de réseau, dans lequel le quatrième élément de réseau est dans le chemin de communication et est en aval du premier élément de réseau.

10. Appareil d'ajustement de ressource de chemin (600), fourni dans une unité de commande de gestion, l'unité de commande de gestion étant connectée en communication à une pluralité d'éléments de réseau dans un chemin de communication, l'appareil d'ajustement de ressource de chemin comprenant :
un second module de réception (601), configuré pour recevoir une alarme envoyée par un premier élément de réseau dans le cas où il est détecté qu'une défaillance d'ajustement de ressource s'est produite dans le chemin de communication, dans lequel le premier élément de réseau est l'un quelconque parmi la pluralité d'éléments de réseau ; et
un premier module d'envoi (602), configuré pour envoyer, à un cinquième élément de réseau de la pluralité d'éléments de réseau, un ordre indiquant de retirer un ajustement de ressource,
**caractérisé en ce que** l'ajustement de ressource comprend un ajustement de largeur de bande ;
dans lequel l'ordre indiquant de retirer un ajustement de ressource est configuré pour indiquer au cinquième élément de réseau de :
réaliser un traitement d'ajustement d'augmentation de largeur de bande avec un troisième élément de réseau dans le cas où l'ajustement de ressource est une diminution de largeur de bande et que le cinquième élément de réseau a terminé l'ajustement de ressource, dans lequel le troisième élément de réseau est dans le chemin de communication et est en amont du cinquième élément de réseau ; ou
réaliser un traitement d'ajustement de diminution de largeur de bande avec un quatrième élément de réseau dans le cas où l'ajustement de ressource est une augmentation de largeur de bande et que le cinquième élément de réseau a terminé l'ajustement de ressource, dans lequel le quatrième élément de réseau est dans le chemin de communication et est en aval du cinquième élément de réseau.

11. Dispositif de communication, comprenant : un émetteur-récepteur, une mémoire, un processeur et un programme informatique stocké sur la mémoire et exécutable sur le processeur, le processeur étant configuré pour lire le programme dans la mémoire afin de mettre en œuvre des étapes dans le procédé d'ajustement de ressource de chemin selon l'une quelconque des revendications 1 à 6.

12. Dispositif de communication, comprenant : un émetteur-récepteur, une mémoire, un processeur et un programme informatique stocké dans la mémoire et exécutable sur le processeur, le processeur étant configuré pour lire le programme dans la mémoire afin de mettre en œuvre des étapes dans le procédé d'ajustement de ressource de chemin selon la revendication 7 ou 8.

13. Support de stockage lisible par ordinateur, configuré pour stocker un programme informatique, le programme informatique, lorsqu'il est exécuté par un processeur, mettant en œuvre des étapes dans le procédé d'ajustement de ressource de chemin selon l'une quelconque des revendications 1 à 6.

14. Support de stockage lisible par ordinateur, configuré pour stocker un programme informatique, le programme informatique, lorsqu'il est exécuté par un processeur, mettant en œuvre des étapes dans le procédé d'ajustement de ressource de chemin selon la revendication 7 ou 8.
